# FASCICULE DE BREVET EUROPEEN

(11) **EP 2 533 014 B1**
(45) Date de publication et mention de la délivrance du brevet: **24.12.2014**
(21) Numéro de dépôt: 12170861.4
(22) Date de dépôt: 05.06.2012
(51) Int. Cl.: G01C 21/34, G08G 5/06

(54) **Procédé de création d'un chemin de roulage sur une zone aéroportuaire et dispositif associé**
Verfahren zur Erstellung eines Rollenförderbands in einem Flughafenbereich und entsprechende Vorrichtung
Method for creating a taxiway in an airport area and associated device

(30) Priorité: 10.06.2011 FR 1101785
(43) Date de publication de la demande: 12.12.2012
(73) Titulaire: Thales, 92200 Neuilly Sur Seine (FR)
(72) Inventeur: Lafon, Stephanie, 33700 Merignac (FR); Michel, François, 33160 Saint Medard En Jalles (FR)
(74) Mandataire: Bréda, Jean-Marc

(56) Documents cités:
- FR-A1- 2 919 416
- US-A1- 2004 006 412
- US-A1- 2010 125 403
- US-A1- 2010 198 489

## Description

Le domaine de l'invention est celui de la circulation des aéronefs sur les zones aéroportuaires avant leur décollage ou après leur atterrissage et des moyens électroniques et informatiques permettant d'indiquer aux équipages le chemin à suivre sur ces zones.

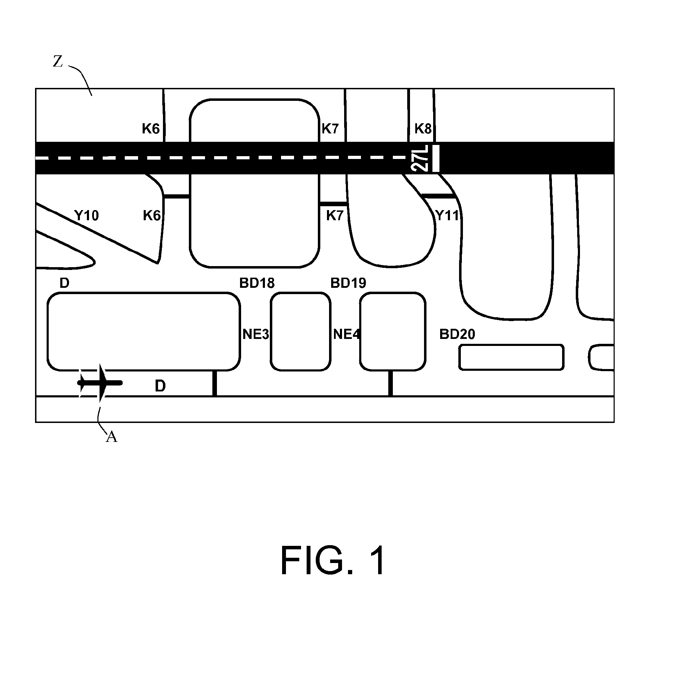

De façon classique, comme dans le document US2004/0006412, lors des phases de roulage sur une zone aéroportuaire, les pilotes reçoivent des consignes de roulage par le contrôle de trafic aérien ou « ATC ». La figure 1 représente une vue de dessus partielle d'une zone aéroportuaire Z. Dans cette zone, l'aéronef A situé sur la voie B doit rejoindre la piste de décollage « 27L » figurée en noir sur la figure 1. Le pilote va recevoir une consigne de roulage lui indiquant par exemple de passer par les voies « BD20 » et « Y11 ». Une consigne ATC autorisant le roulage est aussi appelée clairance de roulage. Ces consignes donnent aux pilotes l'autorisation de rouler jusqu'à un certain point sans craindre le moindre conflit avec un autre avion ou un autre véhicule. L'ATC communique ces informations à la voix et les pilotes les mémorisent et les inscrivent éventuellement sur du papier ou dans une zone de saisie textuelle telle qu'un « scratchpad » d'une unité de contrôle électronique. Cette unité peut être un « MCDU », acronyme de « Multi Control Display Unit ». Les pilotes utilisent ensuite des cartes papier pour se repérer sur la zone aéroportuaire et suivre la route indiquée.

Actuellement, certains systèmes embarqués peuvent calculer le chemin à suivre à partir de ces consignes et représenter ce chemin sur des cartes électroniques d'aéroport afin de simplifier la tâche de navigation des pilotes. Le système doit donc parfaitement reconnaître les clairances pour pouvoir les traiter et les afficher.

Pour saisir les clairances, plusieurs solutions sont possibles. En effet, la clairance peut être entrée dans le système :
- Soit automatiquement, en recevant les informations nécessaires à l'affichage de la clairance par une liaison numérique ou par reconnaissance vocale ;
- Soit sur intervention manuelle du pilote. Dans ce dernier cas, il saisit textuellement la consigne ATC qui est alors interprétée par le système puis affichée sur la carte. La saisie peut être effectuée sur un écran tactile et lue par un système de reconnaissance d'écriture ou plus simplement, la saisie peut être faite sur un clavier alphanumérique.

Dans le cas d'une intervention manuelle du pilote, la saisie sur un clavier alphanumérique offre l'avantage de pouvoir se déployer sur des moyens d'édition tels que les unités MCDU déjà présents sur de nombreux appareils.

En général, les consignes de roulage indiquent la destination qui peut être, à titre d'exemple, « holding position », « stand », « runway » puis la route à suivre composée de noms de voies de circulation appelées « taxiways ». Ainsi, une consigne a généralement la forme suivante :
TAXI TO [Position d'arrêt] VIA [Route spécifique à suivre]

Si l'on veut entrer une consigne sans ambigüités, on doit entrer cette consigne en introduisant un séparateur entre chaque élément aéroportuaire pour permettre au système de les trouver facilement et sans erreurs dans une base de données. Par exemple, la consigne ATC : « TAXI TO stand E10 VIA taxiways T40, T41 et M2 » se traduit par la saisie du pilote suivante: « E10-T40-T41-M2 ». Cependant, l'ajout d'un séparateur entre chaque élément ajoute une charge de travail au pilote qui risque ne pas avoir le temps de saisir la consigne complète qui lui est dictée par l'ATC.

L'objet de l'invention est de proposer des moyens et un procédé permettant d'éliminer partiellement ou totalement les séparateurs de la saisie effectuée par le pilote des consignes ATC. Dans ce cas, le système doit faire preuve d'intelligence pour reconstruire la route à partir d'éléments non distinctifs saisis par le pilote.

Plus précisément, l'invention a pour premier objet un procédé de création d'un chemin de roulage sur une zone aéroportuaire comprenant au moins les étapes suivantes :
- Etape 1 : Entrée par un utilisateur au moyen d'un dispositif de saisie alphanumérique d'une consigne représentative d'une succession de noms d'éléments aéroportuaires appelés points de passage représentant le chemin de roulage à créer, chaque nom de point de passage étant composé de caractères alphanumériques, la succession de ces noms ne comportant pas l'ensemble des séparateurs permettant de les identifier un à un ;
- Etape 2 : Décomposition de la consigne par un dispositif d'analyse lexicale en au moins une succession de noms crédibles de points de passages, un nom crédible correspondant effectivement à un nom d'élément de roulage ou de point d'arrêt de la zone aéroportuaire compris dans une base de données aéroportuaire ;
- Etape 3 : Dans le cas où il existe au moins deux successions de noms crédibles, vérification pour chaque succession que le chemin correspondant est compatible des connexités existant entre les différents éléments aéroportuaires ;
- Etape 4 : Dans le cas où, à la suite des étapes 2 ou 3, il existe un et un seul chemin crédible, c'est-à-dire un chemin correspondant à la fois à des noms de points de passage crédibles et compatibles des connexités existant entre les différents éléments de l'aéroport, affichage dudit chemin sur un dispositif d'affichage.

Avantageusement, les chemins établis à l'étape 3 du procédé sont réalisés au moyen d'un graphe de connexion des éléments de la zone aéroportuaire, chaque élément aéroportuaire correspondant étant décrit par un polygone, chaque polygone étant défini dans une base de données aéroportuaire par une dénomination, un type, un ensemble de segments et un ensemble de points de connexion, chaque point de connexion correspondant à une frontière commune avec un autre polygone, l'ensemble des segments reliant les points de connexion de chaque polygone formant le graphe de connexion.

L'invention concerne également un système de création d'un chemin de roulage sur une zone aéroportuaire permettant de mettre en oeuvre le procédé précédent, caractérisé en ce que ledit système comporte :
- Un dispositif de saisie alphanumérique ;
- Un dispositif d'analyse lexicale relié à un lexique des éléments aéroportuaires de ladite zone aéroportuaire ;
- Un dispositif de calcul de chemins relié à une base de données comportant un graphe de connexion des éléments de la zone aéroportuaire ;
- Un dispositif d'affichage du chemin de roulage et de la zone aéroportuaire.

Avantageusement, le dispositif de saisie alphanumérique est une unité électronique « MCDU » ou un dispositif de saisie alphanumérique est à reconnaissance d'écriture ou un dispositif de saisie alphanumérique est à reconnaissance vocale.

L'invention sera mieux comprise et d'autres avantages apparaîtront à la lecture de la description qui va suivre donnée à titre non limitatif et grâce aux figures annexées parmi lesquelles :
La figure 1 déjà décrite représente une vue de dessus d'une zone aéroportuaire avec ses différentes clairances ;
La figure 2 représente un synoptique d'un système de création d'un chemin de roulage sur une zone aéroportuaire selon l'invention ;
La figure 3 représente un graphe de connexion représentatif des chemins possibles à l'intérieur de la zone aéroportuaire.

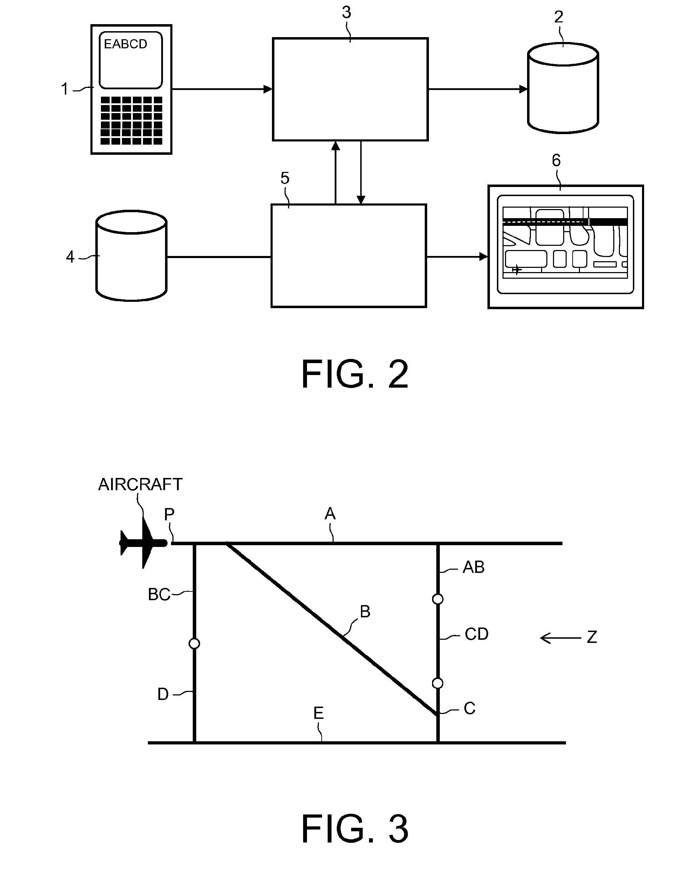

Le système de création d'un chemin de roulage sur une zone aéroportuaire selon l'invention est représenté en figure 2. Il comporte les éléments suivants :
- Un dispositif 1 permettant de saisir des clairances textuelles. Il en existe différents types. A titre d'exemples, on peut utiliser l'unité électronique « MCDU » du cockpit ou un dispositif tactile à reconnaissance d'écriture ou encore un dispositif de saisie alphanumérique à reconnaissance vocale ;
- un lexique 2 de tous les noms d'éléments aéroportuaires de la zone aéroportuaire que peut emprunter un avion. Il comprend les différents noms de taxiways, de runways, les points d'arrêt....
- Un dispositif d'analyse lexicale 3 permettant d'interpréter les clairances textuelles de façon à positionner des séparateurs entre elles de telle sorte que tous les noms de clairances appartiennent au lexique 2 précédent ;
- Une base de données 4 décrivant le réseau des voies de circulation de l'aéroport et leurs interconnexions. On trouvera dans le brevet français FR 2 919 416 intitulé « Procédés de génération d'un graphe de connectivité d'éléments d'un aéroport pour l'aide au roulage et dispositifs associés » un procédé permettant d'établir ce type de graphe à partir d'une base de données aéroportuaire. Ce procédé est basé sur la réalisation d'un graphe composé de segments de connexion. Le graphe est établi de la façon suivante. Chaque élément aéroportuaire dédié au roulage est associé à un élément décrit par un polygone. Chaque polygone est défini dans une base de données aéroportuaire par une dénomination, un type, un ensemble de segments et un ensemble de points de connexion. Chaque point de connexion correspond à une frontière commune avec un autre polygone, l'ensemble des segments de connexion reliant les points de connexion de chaque polygone forment le graphe de connexion ;
- Un dispositif 5 permettant le calcul de chemins à partir d'une clairance textuelle avec des séparateurs au moyen d'algorithmes de parcours de graphe classiques de type « Dijkstra » ;
- Un dispositif d'affichage 6 des chemins trouvés et de la zone aéroportuaire. L'afficheur fait partie des écrans de la planche de bord ou des afficheurs tête haute. L'affichage peut être une vue de dessus ou une vue en perspective. Le chemin peut être représenté graphiquement ou textuellement par l'affichage de l'ensemble de ces points de passage.

A titre d'exemple et pour bien comprendre le procédé de création d'un chemin de roulage sur une zone aéroportuaire selon l'invention mis en oeuvre au moyen du système précédent, la figure 3 représente une zone aéroportuaire simplifiée Z dans laquelle un aéronef AIRCRAFT se trouve en un point P de la zone et doit se rendre sur la piste E. Comme indiqué sur la figure 3, la zone comporte les éléments de roulage A, AB, CD, C, BC, D, B et E. L'ATC donne au pilote la consigne suivante : Aller en E en passant successivement par A, BC, D et E.

Comme il a été dit, le procédé de création d'un chemin de roulage selon l'invention comprend quatre étapes principales.

La première étape consiste, pour l'utilisateur, à entrer au moyen du dispositif de saisie alphanumérique 1 une consigne représentative de la succession de points de passage représentant le chemin de roulage à créer. Généralement, cette consigne débute par le but à atteindre, en l'occurrence E, puis le pilote entre successivement les clairances intermédiaires qui sont dans le cas présent A, BC et D. Comme il a été dit, si ces différents éléments sont séparés par un séparateur, la consigne est interprétable sans ambigüités. Si le pilote ne rentre pas de séparateur, par exemple, si la consigne entrée est EABCD, il existe différents chemins possibles correspondant à cette consigne. Dans ce cas, le procédé passe à la seconde étape.

Dans la seconde étape, le dispositif d'analyse lexicale 3 décompose la consigne entrée en autant de successions de noms crédibles de points de passage, un nom crédible correspondant effectivement à un nom d'élément de la zone aéroportuaire dans le lexique 2. Dans le cas de la figure 3, le dispositif d'analyse lexicale 3 va trouver les cinq successions crédibles suivantes : E-A-B-C-D ; E-A-B-CD ; E-A-BC-D ; E-AB-C-D et enfin E-AB-CD. Comme il existe plusieurs chemins possibles, le procédé passe à la troisième étape.

Dans la troisième étape, le dispositif de calcul de chemin 5 vérifie, en utilisant la base de données 4, pour chaque succession possible que le chemin correspondant est compatible des connexités existant entre les différentes clairances de la succession. Dans le cas présent, comme on le voit sur la figure 3, seule la seconde succession E-A-BC-D est possible. C'est la seule succession dans laquelle les points de passage se succèdent continument. Elle correspond bien à la consigne initiale de l'ATC. On passe alors à la quatrième étape.

A la quatrième étape, dans la mesure où, à la suite de la seconde et de la troisième étape, il existe un et un seul chemin crédible, c'est-à-dire un chemin correspondant à la fois à des noms de points de passage crédible et compatible des connexités existant entre les différents éléments de l'aéroport, le système affiche le chemin trouvé unique sur le dispositif d'affichage 6. Bien entendu, si le procédé ne trouve aucun chemin ou au contraire en trouve plusieurs, le pilote est prévenu qu'il y a un problème. Il doit alors vérifier la consigne entrée et éventuellement la modifier.

## Revendications

1. Procédé de création d'un chemin de roulage sur une zone aéroportuaire (Z) décrite dans une base de données (4) comportant le réseau des différents éléments aéroportuaires et leurs interconnexions, ledit procédé comprenant au moins les étapes suivantes :
- Etape 1 : Entrée par un utilisateur au moyen d'un dispositif de saisie alphanumérique (1) d'une consigne représentative d'une succession d'éléments aéroportuaires appelés points de passage, représentant le chemin de roulage à créer, chaque nom de point de passage étant composé de caractères alphanumériques, la succession de ces noms ne comportant pas l'ensemble des séparateurs permettant de les identifier un à un ;
- Etape 2 : Décomposition de la consigne par un dispositif d'analyse lexicale (3) en au moins une succession de noms crédibles de points de passage, un nom crédible correspondant effectivement à un nom d'élément de la zone aéroportuaire ;
- Etape 3 : Dans le cas où il existe au moins deux successions de noms crédibles de points de passage, vérification pour chaque succession que le chemin correspondant est compatible des connexités existant entre les différents éléments aéroportuaires de la succession ;
- Etape 4 : Dans le cas où, à la suite des étapes 2 ou 3, il existe un et un seul chemin crédible, c'est-à-dire un chemin correspondant à la fois à des noms de points de passage crédibles et compatibles des connexités existant entre les différents éléments aéroportuaires, affichage dudit chemin sur un dispositif d'affichage.

2. Procédé de création d'un chemin de roulage sur une zone aéroportuaire selon la revendication 1, **caractérisé en ce que** les chemins établis à l'étape 3 sont réalisés au moyen d'un graphe de connexion des éléments de la zone aéroportuaire, chaque chemin étant associé à une succession d'éléments aéroportuaires, chaque élément aéroportuaire correspondant étant décrit par un polygone, chaque polygone étant défini dans une base de données aéroportuaires par une dénomination, un type, un ensemble de segments et un ensemble de points de connexion, chaque point de connexion correspondant à une frontière commune avec un autre polygone, l'ensemble des segments reliant les points de connexion de chaque polygone formant le graphe de connexion.

3. Système de création d'un chemin de roulage sur une zone aéroportuaire (Z) permettant de mettre en oeuvre le procédé selon l'une des revendications 1 ou 2, **caractérisé en ce que** ledit système comporte :
- Un dispositif de saisie alphanumérique (1) ;
- Un dispositif d'analyse lexicale (3) relié à un lexique (2) des éléments aéroportuaires de ladite zone aéroportuaire ;
- Un dispositif de calcul (5) de chemins relié à une base de données (4) comportant un graphe de connexion des éléments de la zone aéroportuaire ;
- Un dispositif d'affichage (6) du chemin de roulage et de la zone aéroportuaire.

4. Système de création d'un chemin de roulage sur une zone aéroportuaire selon la revendication 3, **caractérisé en ce que** le dispositif de saisie alphanumérique (1) est une unité électronique « MCDU ».

5. Système de création d'un chemin de roulage sur une zone aéroportuaire selon la revendication 3, **caractérisé en ce que** le dispositif de saisie alphanumérique (1) est à reconnaissance d'écriture.

6. Système de création d'un chemin de roulage sur une zone aéroportuaire selon la revendication 3, **caractérisé en ce que** le dispositif de saisie alphanumérique (1) est à reconnaissance vocale.

## Patentansprüche

1. Verfahren zum Erzeugen einer Rollbahn in einer Flughafenzone (Z), beschrieben in einer Datenbank (4), die das Netzwerk von verschiedenen Flughafenelementen und deren Verbindungen umfasst, wobei das Verfahren wenigstens die folgenden Schritte beinhaltet:
- Schritt 1: Eingeben, durch einen Benutzer über eine alphanumerische Eingabevorrichtung (1), einer Anweisung, die eine Folge von Flughafenelementen repräsentiert, Übergangsstellen genannt, die die zu erzeugende Rollbahn repräsentieren, wobei alle Übergangsstellennamen aus alphanumerischen Zeichen zusammengesetzt sind, wobei die Folge dieser Namen nicht die Gesamtheit der Separatoren beinhaltet, mit denen sie nacheinander identifiziert werden können;
- Schritt 2: Untergliedern der Anweisung mittels einer lexikalischen Analysevorrichtung (3) in wenigstens eine Folge von glaubwürdigen Übergangsstellennamen, wobei ein glaubwürdiger Name effektiv einem Namen eines Elements der Flughafenzone entspricht;
- Schritt 3: Verifizieren für jede Folge, falls es wenigstens zwei Folgen von glaubwürdigen Übergangsstellennamen gibt, dass die entsprechende Bahn mit den existierenden Konnexitäten zwischen den verschiedenen Flughafenelementen der Folge kompatibel ist;
- Schritt 4: Anzeigen, falls es nach Schritt 2 oder 3 nur eine einzige glaubwürdige Rollbahn gibt, d.h. eine Bahn, die Übergangsstellennamen entspricht, die gleichzeitig glaubwürdig und mit den existierenden Konnexitäten zwischen den verschiedenen Flughafenelementen kompatibel sind, der Bahn auf einer Anzeigevorrichtung.

2. Verfahren zum Erzeugen einer Rollbahn in einer Flughafenzone nach Anspruch 1, **dadurch gekennzeichnet, dass** die in Schritt 3 erzeugten Bahnen mittels einer Graphik der Verbindungen der Elemente der Flughafenzone erzeugt werden, wobei jede Bahn mit einer Folge von Flughafenelementen assoziiert ist, wobei jedes entsprechende Flughafenelement durch ein Polygon beschrieben wird, wobei jedes Polygon in einer Flughafendatenbank durch eine Bezeichnung, einen Typ, einen Satz von Segmenten und einen Satz von Verbindungspunkten definiert ist, wobei jeder Verbindungspunkt einer gemeinsamen Grenze zu einem anderen Polygon entspricht, wobei die Gesamtheit der die Verbindungspunkte jedes Polygons verbindenden Segmente die Verbindungsgraphik bildet.

3. System zum Erzeugen einer Rollbahn in einer Flughafenzone (Z), das die Ausführung des Verfahrens nach Anspruch 1 oder 2 zulässt, **dadurch gekennzeichnet, dass** das System Folgendes umfasst:
- eine alphanumerische Eingabevorrichtung (1);
- eine lexikalische Analysevorrichtung (3), die mit einem Lexikon (2) der Flughafenelemente der Flughafenzone verbunden ist;
- eine Vorrichtung (5) zum Berechnen von Bahnen, wobei die Vorrichtung mit einer Datenbank (4) verbunden ist, die eine Verbindungsgraphik der Elemente der Flughafenzone beinhaltet;
- eine Vorrichtung (6) zum Anzeigen der Rollbahn und der Flughafenzone.

4. System zum Erzeugen einer Rollbahn in einer Flughafenzone nach Anspruch 3, **dadurch gekennzeichnet, dass** die alphanumerische Eingabevorrichtung (1) eine elektronische "MCDU"-Einheit ist.

5. System zum Erzeugen einer Rollbahn in einer Flughafenzone nach Anspruch 3, **dadurch gekennzeichnet, dass** die alphanumerische Eingabevorrichtung (1) eine Schrifterkennungsvorrichtung ist.

6. System zum Erzeugen einer Rollbahn in einer Flughafenzone nach Anspruch 3, **dadurch gekennzeichnet, dass** die alphanumerische Eingabevorrichtung (1) eine Spracherkennungsvorrichtung ist.

## Claims

1. A method for creating a taxiway in an airport zone (Z) described in a database (4) comprising the network of the various airport elements and their interconnections, said method comprising at least the following steps:
- step 1: entering, by a user using an alphanumeric input device (1), an instruction representing a succession of airport elements referred to as crossing points, which represent the taxiway to be created, with each crossing point name being made up of alphanumeric characters, the succession of these names not comprising all of the separators that allow them to be identified one by one;
- step 2: breaking down said instruction, by means of a lexical analysis device (3), into at least one succession of credible names of crossing points, with a credible name effectively corresponding to a name of an element of the airport zone;
- step 3: verifying, for each succession in the event that there are at least two successions of credible names of crossing points, that the corresponding taxiway is compatible with the existing connections between the various airport elements of the succession;
- step 4: displaying, in the event that following steps 2 or 3 there is only one credible taxiway, i.e. a taxiway that corresponds to names of crossing points that are both credible and compatible with the existing connections between the various airport elements, said taxiway on a display device.

2. The method for creating a taxiway in an airport zone according to claim 1, **characterised in that** the taxiways established during step 3 are produced by means of a connection graph for the elements of the airport zone, with each taxiway being associated with a succession of airport elements, each corresponding airport element being described by a polygon, each polygon being defined in an airport database by a denomination, a type, a set of segments and a set of connection points, each connection point corresponding to a common border with another polygon, with all of the segments connecting the connection points of each polygon forming the connection graph.

3. A system for creating a taxiway in an airport zone (Z), which allows the method according to claim 1 or 2 to be implemented, **characterised in that** said system comprises:
- an alphanumeric input device (1);
- a lexical analysis device (3) connected to a lexicon (2) of the airport elements of said airport zone;
- a device (5) for computing taxiways, which device is connected to a database (4) comprising a connection graph of the elements of the airport zone;
- a device (6) for displaying the taxiway and the airport zone.

4. The system for creating a taxiway in an airport zone according to claim 3, **characterised in that** said alphanumeric input device (1) is an electronic "MCDU" unit.

5. The system for creating a taxiway in an airport zone according to claim 3, **characterised in that** said alphanumeric input device (1) is a writing recognition device.

6. The system for creating a taxiway in an airport zone according to claim 3, **characterised in that** said alphanumeric input device (1) is a voice recognition device.
